# EUROPÄISCHE PATENTSCHRIFT

(11) **EP 0 506 645 B1**
(45) Veröffentlichungstag und Bekanntmachung des Hinweises auf die Patenterteilung: **13.03.1996**
(21) Anmeldenummer: 92890040.6
(22) Anmeldetag: 18.02.1992
(51) Int. Cl.: B29C 65/02, H01M 2/14

(54) **Vorrichtung zum Herstellen von Taschen für Batterieplatten**
Apparatus for fabrication of battery plate envelopes
Dispositif pour la fabrication d'enveloppes pour plaques de batterie

(30) Priorität: 27.03.1991 AT 674/91
(43) Veröffentlichungstag der Anmeldung: 30.09.1992
(73) Patentinhaber: ELBAK MASCHINENBAU GmbH, A-8055 Graz, Steiermark (AT)
(72) Erfinder: Kirstein, Wilhelm H., A-1190 Wien (AT); Schwetz, Anton, A-8273 Ebersdorf, Steiermark (AT)
(74) Vertreter: Beer, Manfred, Dipl.-Ing.

(56) Entgegenhaltungen:
- EP-A- 0 062 525
- DE-C- 493 060
- DE-C- 623 624
- FR-A- 1 007 155
- US-A- 1 697 212
- US-A- 4 280 865

## Beschreibung

Die Erfindung betrifft eine Vorrichtung zum Herstellen von Taschen für Batterieplatten aus Kunststoffstreifen, insbesondere aus Streifen aus mikroporösem Polyolefin, mit paarweise angeordneten, den Längsrändern des um eine Batterieplatte herumgelegten Streifens zugeordneten, von beiden Seiten an den Längsrändern anliegenden Riffelrollen, wobei wenigstens einer Riffelrolle jedes Paares ein Antrieb zugeordnet ist, und wobei die Riffelrollen in einem Gestell drehbar gelagert sind.

Vorrichtungen zum Eintaschen von Batterieplatten, beispielsweise von positiven oder negativen Platten für Akkumulatoren sind aus der EP-A-300 991 und aus der EP-A-397 640 bekannt. Bei diesen bekannten Vorrichtungen wird der Streifen aus Separatorband, nachdem er um die einzutaschende Batterieplatte herumgefaltet worden ist, an seinen beiden von der Faltkante ausgehenden Längsrändern unter Einwirkung von Ultraschall verschweißt. Bei der EP-A-300 991 wird die Anordnung aus der Batterieplatte und dem um diese herumgefalteten Streifen aus Separatorband während des Schweißvorganges angehalten, wogegen bei der EP-A-397 640 die Längsränder des um die Batterieplatte herumgefalteten Streifens im Durchlaufverfahren verschweißt werden.

Das für die Herstellung von Taschen für Batterieplatten verwendete Separatorband besteht für gewöhnlich aus einem mikroporösen Polyolefin mit hohem Molekulargewicht und einem inerten Füllwerkstoff (US-A-3 351 495 und US-A-2 570 677).

Neben dem Verbinden der Längsränder des um die Batterieplatte herumgefalteten Streifens zur Bildung der Tasche für die Batterieplatte mit Hilfe von Ultraschall ist es beispielsweise aus der US-A-3 900 341 bekannt, die Längsränder des herumgefalteten Streifens miteinander durch Warmversiegeln zu verbinden und so die Tasche für die Batterieplatte zu bilden.

Die GB-PS 1 497 364 erwähnt zum Verbinden der Längsränder von um eine Batterieplatte herumgelegten Streifen aus Separatormaterial neben dem Heißversiegeln oder Ultraschallverschweißen auch die Verwendung von Klebstoffen. Ebenfalls vorgeschlagen wird die Verwendung von Heißverklebungsmitteln (US-A-4 080 727). Die US-A-4 080 727 schlägt auch vor, die Längsränder des um eine Batterieplatte herumgefalteten Streifens aus Separatormaterial durch geriffelte Rollen zu bearbeiten, um eine gewellte und somit stabilere Verbindung der miteinander durch ein Heißverklebungsmittel verbundenen Längsränder zu erzielen.

Die US-A-4 125 424 schlägt vor, die Längsränder von Separatormaterial aus mikroporösem Kunststoff miteinander mit Hilfe eines dazwischen angeordneten Verbindungsstreifens entweder durch Lösungsmittelschweißen oder durch Lösungsmittelkleben zu verbinden.

Konstruktionen von Vorrichtungen zum Herstellen von Taschen für Batterieplatten sind aus den US-A-4 063 978, 4 080 727, 4 216 579, 4 314 403 und aus der EP-B-62 525 bekannt.

Die letztgenannte Veröffentlichung (EP-B-62 525), auf die sich der Oberbegriff des unabhängigen Anspruches stützt, schlägt vor, die Längsränder von um eine Batterieplatte herumgefaltetem Separator- bzw. Isoliermaterial zur Herstellung von Taschen für Batterieplatten dadurch zu verbinden, daß man die Randstreifen ineinanderdrückt. Dabei soll die Druckkraft innerhalb des Bereiches des plastischen Fließens des Isoliermaterials bei Umgebungstemperatur liegen. So soll gemäß der EP-B-62 525 eine Verbindung der Längsränder allein durch Aufbringen der Druckkraft ohne Anwendung von Heißverklebungsmitteln stattfinden. Um diese Druckkraft innerhalb des Bereiches des plastischen Fließens des Isoliermaterials bei Umgebungstemperatur zu erzielen, werden in der EP-B-62 525 geriffelte Rollen vorgeschlagen, wie dies im Prinzip schon aus der US-A-4 080 727 bekannt ist.

Der Gedanke, geriffelte Rollen zum Verbinden von Papier zu verwenden, ist aus der US-A-1 697 212 und aus der DE-C-493 060 bekannt. Nach der US-A-1 697 212 sollen Blätter von Papier entlang einer Linie dadurch verbunden werden, daß die Papierblätter zwischen scharf keilförmig ausgebildeten Zähnen von zwei ineinander passenden Riffelrollen zusammengepreßt werden. Auf diese Weise sollen die Fasern der Papierblätter gestreckt und in solch innigen Kontakt mit den Fasern des anliegenden Blattes gebracht werden, daß sie, wenn der Druck nachläßt, zusammenhalten und nicht ohne Zerreißen oder Zerstören der Fasern getrennt werden können.

Die DE-C-493 060 beschreibt eine Riffelrolle, die zum Heften von Blättern durch gezahnte Heftelemente mit gewinkelten Zähnen ausgestattet ist. Die bekannte Riffelrolle kann auch aus zwei Teilen zusammengesetzt sein.

Das in der EP-B-62 525 vorgeschlagene Verfahren zum Verbinden von Isoliermaterial im Bereich der Längsränder zur Bildung von Batterieplatten enthaltenden Taschen ausschließlich durch Anwenden von Druck ohne Erwärmung oder die Verwendung von Klebstoffen setzt voraus, daß es durch das Anwenden des Druckes zu einem Zusammenbruch der Mikroporen innerhalb des Separatormaterials kommt. Dabei soll, bevor der Zusammenbruch der Mikroporen vollständig ist, eine wesentliche Materialmenge von den benachbarten Randstreifen in die Mikroporen der gegenüberliegenden Bahn fließen. Dadurch soll erreicht werden, daß nach Beendigung der Druckanwendung gemäß der EP-B-62 525 die beiden Randstreifen integriert miteinander verbunden und versiegelt sind. Der gemäß der EP-B-62 525 anzuwendende Druck ist größer als die Formänderungsfestigkeit des Separatormaterials und muß innerhalb des Bereiches des plastischen Fließens liegen, d.h. der Druck muß mindestens gleich groß sein, wie die Kraft, die zu einem Zusammendrücken der Mikroporen führt.

Bei der praktischen Anwendung des aus der EP-B-62 525 bekannten Verfahrens hat sich gezeigt, daß es schwer ist, den erforderlichen Druck aufzubringen. Ist der Druck zu gering, kommt es zu einer ungenügenden Verbindung der Randstreifen, so daß sich die Tasche beim Zusammenbauen der Batterien bzw. Akkumulatoren im Randbereich wieder öffnet und so ihre Wirksamkeit verliert. Wird ein zu hoher Druck angewendet, dann kann das Separatorbandmaterial im Randbereich abgequetscht werden, so daß im Randbereich größere bzw. kleinere Löcher oder geschwächte Stellen entstehen und keine in den Seitenbereichen geschlossene bzw. hinreichend feste Naht erzielt wird.

Der Erfindung liegt die Aufgabe zugrunde, eine Vorrichtung der eingangs genannten Gattung anzugeben, mit der die geschilderten Probleme der bekannten Verfahren vermieden werden und bei dem ohne Beschädigung der Struktur des Separatormaterials (insbesondere die Mikroporen sollen erhalten bleiben) eine sichere Verbindung der beiden Streifenabschnitte in ihrem Längsrandbereich der die Batterieplatte aufnehmenden Tasche erreicht wird.

In Lösung dieser Aufgabe zeichnet sich die erfindungsgemäße Vorrichtung dadurch aus, daß die Riffelung der Riffelrollen von gewinkelten Rippen gebildet ist, daß wenigstens der die Rippen tragende Teil der Riffelrollen aus zwei Teilen besteht, die in einer zur Drehachse der Riffelrollen senkrecht stehenden Ebene aneinanderliegen, wobei die Spitzen der Rippen in dieser Ebene liegen und daß der eine Teil der Riffelrolle als Ring ausgebildet ist, der an der radial außen liegenden Fläche einer Ringschulter des anderen Teils der Riffelrolle sitzt und von einem Druckring gegen diesen Teil gepreßt wird.

Dadurch, daß bei der erfindungsgemäßen Vorrichtung anders als bisher gewinkelt ausgebildete Rippen vorgesehen sind, welche die Riffelung der Riffelrollen, die von beiden Seiten her gleichzeitig an beiden miteinander zu verbindenden Längsrändern der herzustellenden Tasche am Separatormaterial angreifen, bilden, ergibt sich eine reib- und formschlüssige Verbindung der Längsränder, ohne daß es eines erhöhten Druckes bedarf. Dadurch wird gewährleistet, daß die Mikrostruktur des Separatormaterials nicht zerstört und beschädigt wird. Die mit Hilfe der erfindungsgemäßen Vorrichtung hergestellten Taschen für Batterieplatten sind für die Handhabung und den späteren Gebrauch der Batterie oder des Akkumulators hinreichend fest, so daß auch bei der weiteren Handhabung der eingetaschten Batterieplatten bei der Herstellung der Akkumulatoren und auch im späteren Gebrauch, wenn die Batterie oder der Akkumulator Erschütterungen ausgesetzt ist (die beispielsweise auftreten, wenn die Batterie oder der Akkumulator in Fahrzeugen eingesetzt wird) sicher geschlossen bleiben.

Die in der erfindungsgemäßen Vorrichtung hergestellten Taschen für Batterieplatten weisen Randnähte auf, die nicht geöffnet werden können, wenn sich die Batterieplatte von innen her gegen die Seitenränder der sie aufnehmenden Tasche, die mit der erfindungsgemäßen Vorrichtung hergestellt worden ist, anlegt bzw. gegen die Innenseite der Randnaht drückt. Wird hingegen quer zur Ebene der Tasche auf die beiden Abschnitte des Separatormaterials Zug ausgeübt, so läßt sich die erfindungsgemäßen Vorrichtung hergestellte Verbindung öffnen, ohne daß das Separatorbandmaterial zerreißt. Dies zeigt, daß mit der erfindungsgemäßen Vorrichtung im Bereich der Längsränder der Tasche für Batterieplatten eine lediglich reib- bzw. formschlüssige Verbindung nach Art eines Reißverschlusses erreicht wird. Ein Erhöhen des von den Riffelrollen auf das Separatormaterial ausgeübten Druckes bis in den Bereich des plastischen Fließens des Separatormaterials bringt keine Erhöhung, sondern eher eine Schwächung der Festigkeit der beiden Randnähte. Mit den erfindungsgemäß ausgebildeten Riffelrollen wird daher ein Druck auf die Längsränder des zur Tasche zu verbindenden, gefalteten Streifens aus Separatormaterial ausgeübt, der unter dem ein plastisches Fließen bewirkenden Druck liegt.

Das Herstellen der Riffelrollen der erfindungsgemäßen Vorrichtung gestaltet sich besonders einfach, weil wenigstens der die Rippen tragende Teil der Riffelrollen aus zwei Teilen besteht, die in einer zur Drehachse der Riffelrollen senkrecht stehenden Ebene aneinanderliegen, wobei die Spitzen der Rippen in dieser Ebene liegen. Die beiden Teile der erfindungsgemäß verwendeten Riffelrolle lassen sich dann so einfach wie eine Schrägverzahnung herstellen.

In einer praktischen Ausführungsform kann bei der erfindungsgemäßen Vorrichtung vorgesehen sein, daß die Rippen zu einer zur Drehachse der Riffelrollen senkrecht stehenden Ebene, die durch die Mitte der Riffelrolle geht, symmmetrisch gewinkelt sind.

Das Verbinden der Längsränder des Streifens aus Separatormaterial erfolgt besonders schonend, wenn vorgesehen ist, daß die Spitzen der Rippen, bezogen auf die Drehrichtung der Riffelrollen nach vorne weisen.

Um einen nicht scharfkantigen Übergang zwischen der mit den erfindungsgemäßen Riffelrollen hergestellten Naht und dem nicht miteinander verbundenen Bereich des Separatormaterials, d.h. den Bereich der Tasche, in dem die Batterieplatte aufgenommen ist, zu erreichen, kann im Rahmen der Erfindung vorgesehen sein, daß die dem Aufnahmeraum der zu bildenden Tasche für eine Batterieplatte benachbarte Kante der Riffelrollen abgefast ist. Dabei ist bevorzugt, daß die Fasung mit einer zur Drehachse der Riffelrollen senkrecht stehenden Ebene einen Winkel von 15° bis 45° einschließt.

Besonders günstige Ergebnisse werden mit der erfindungsgemäßen Vorrichtung erzielt, wenn vorgesehen ist, daß die beiden Flanken jeder Rippe miteinander einen Winkel von etwa 90° einschließen.

Eine weitere Erhöhung der Festigkeit der erzielten Randnähte bewirkt die erfindungsgemäß vorgesehene Maßnahme, nach welcher die beiden Teilrippen der Rippen miteinander einen stumpfen Winkel einschließen.

In einer praktischen Ausführungsform der erfindungsgemäßen Vorrichtung mit zwei Paaren von Riffelrollen, die auf synchron und gegensinnig angetriebenen Wellen befestigt sind, wobei die Riffelungen bildenden Rippen jedes Paares von Riffelrollen ineinandergreifen, mit einem Gestell, in dem die Wellen gelagert sind, und mit einem Drehantrieb für die Riffelrollen, kann vorgesehen sein, daß eine der beiden Wellen mit dem Antrieb gekuppelt ist, daß mit der Welle ein Zahnrad verbunden ist, das mit einem Zahnrad, das mit der anderen Welle verbunden ist, kämmt, daß die mittelbar drehangetriebene Welle in einem Träger gelagert ist, der am Gestell lösbar festgelegt ist, und daß der die mittelbar drehangetriebene Welle tragende Träger zur Vergrößerung des Abstandes zwischen den Riffelrollen um eine zu den die Riffelrollen tragenden Wellen parallele Achse abklappbar ist. Auf diese Weise können die Riffelrollen jedes Paares von Riffelrollen im Falle einer Störung, beispielsweise wenn ein Separatorstreifen schlecht zugeführt worden ist und zwischen den Riffelrollen steckenbleibt oder sonstwie den Produktionsablauf stört, voneinander entfernt werden. Das Entnehmen des beschädigten Separatormaterials gestaltet sich dann besonders einfach.

In der Praxis kann dabei vorgesehen sein, daß der die mittelbar angetriebene Welle tragende Träger von zwei Lagerschilden gebildet wird, die mit einem Zapfen verschwenkbar am Gestell gelagert sind, und daß die eingeschwenkte Stellung der Lagerschilde durch wenigstens zwei Stellschrauben, die an den Lagerschilden angreifen, definiert ist. Auf diese Art und Weise kann auch der Abstand zwischen den Riffelrollen jedes Riffelrollenpaares und somit der auf dieses ausgeübte Druck in Abhängigkeit von der Dicke des verwendeten Separatormaterials auf die jeweils erforderliche Größe optimal eingestellt werden.

In einer einfachen Ausführungsform ist vorgesehen, daß eine Einrichtung zur Sicherung der Lagerschilde in ihrer eingeschwenkten Stellung vorgesehen ist, beispielsweise jedem Lagerschild eine Spannschraube zugeordnet ist.

Weitere Einzelheiten und Merkmale der Erfindung ergeben sich aus der nachstehenden Beschreibung eines Ausführungsbeispiels, wobei darauf hingewiesen wird, daß die gezeigte Ausführungsform mit besonderem Vorteil in eine Vorrichtung zum Eintaschen von Batterieplatten gemäß der EP-B-300 991 oder der EP-B-397 640 integriert werden und die dort vorgesehenen Ultraschallschweißvorrichtungen ersetzen kann. Es zeigt:
Fig. 1 eine Riffelrolle in Seitenansicht,
Fig. 2 einen Schnitt längs der Linie II-II in Fig. 1,
Fig. 2a im Schnitt die Einzelheit I von Fig. 2,
Fig. 3 die Riffelrolle in Ansicht,
Fig. 4 und 4a eine mit der erfindungsgemäßen Vorrichtung hergestellte Tasche,
Fig. 5 in Seitenansicht eine Vorrichtung zum Verbinden der Seitenränder von um eine Batterieplatte herumgelegten Streifen aus Separatormaterial,
Fig. 6 einen Schnitt längs der Linie VI-VI in Fig. 5,
Fig. 7 einen Schnitt längs der Linie VII-VII in Fig. 5,
Fig. 8 die Vorrichtung in Richtung des Pfeiles Y von Fig. 6 aus gesehen,
Fig. 9 einen Schnitt längs der Linie IX-IX in Fig. 5,
Fig. 10 eine Einzelheit in Richtung des Pfeiles X in Fig. 7 gesehen und
Fig. 11 einen Teilschnitt längs der Linie XI-XI in Fig. 6,
Fig. 12 eine aus der EP-A-300 991 bekannte Vorrichtung zum Eintaschen von positiven und negativen Platten für Akkumulatoren,
Fig. 12a die mit der erfindungsgemäßen Vorrichtung zum Herstellen von Taschen ausgerüstete Vorrichtung von Fig. 12,
Fig. 13a und 13b eine aus der EP-A-397 640 bekannte Vorrichtung zum Eintaschen von positiven und negativen Platten für Akkumulatoren und
Fig. 13c die mit der erfindungsgemäßen Vorrichtung zum Herstellen von Taschen ausgerüstete Vorrichtung aus Fig. 13a und 13b.

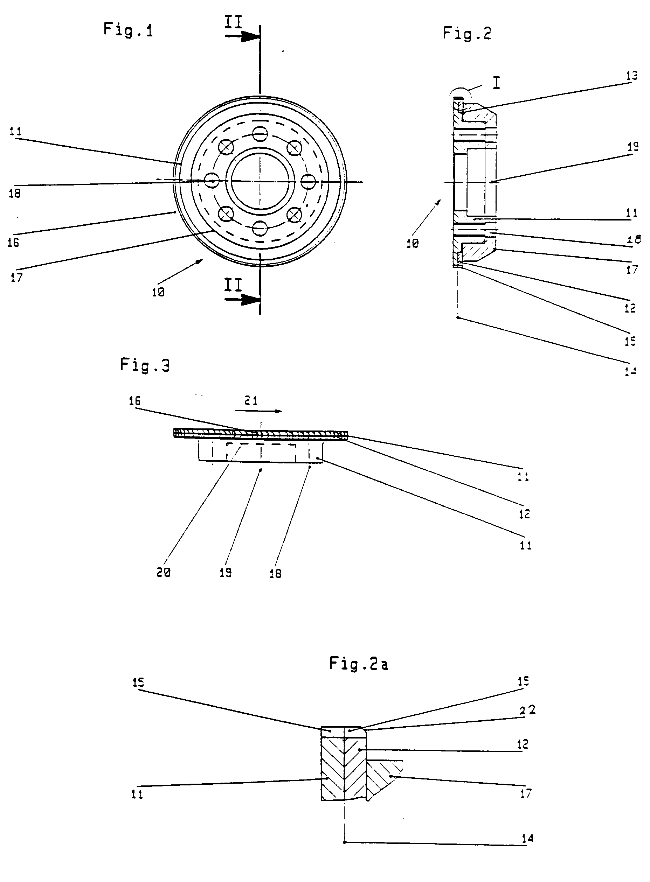

Eine Riffelrolle 10, wie sie in den Fig. 1 bis 3 gezeigt ist, besteht aus einem Hauptteil 11 und einem ringförmigen Teil 12, die an ihrem Außenumfang durch im querschnitt im wesentlichen dreieckförmige Teilrippen 15 gebildete gewinkelte Rippen 16 tragen.

Der ringförmige Teil 12 der Riffelrolle 10 sitzt auf einer am Hauptteil 11 der Riffelrolle 10 vorgesehenen, ringförmigen Schulter 13 und wird durch einen Druckkörper 17 und mit Hilfe von in Gewindebohrungen 18 im Hauptteil 11 eingeschraubten Schrauben (nicht dargestellt) festgehalten. Aus der Darstellung von Fig. 3 ist ersichtlich, daß sich die Teilrippen 15 am Hauptkörper 11 und am ringförmigen Teil 12 der Riffelrolle 10 zu einer Radialebene 14 (zu einer zur Drehachse 19 senkrechten Ebene) unter einem spitzen Winkel erstrecken. Die Teilrippen 15 am Hauptteil 11 und die Teilrippen 15 am ringförmigen Teil 12 der Riffelrolle 10 schließen somit miteinander einen stumpfen Winkel ein, wie dies Fig. 3 zeigt. Dabei ist die Ausrichtung der Teilrippen 15 so gewählt, daß die Spitzen 20, bezogen auf die Drehrichtung 21 bei Benützung der Riffelrollen 10 zum Verbinden der Längsränder von Streifen aus Separatormaterial nach vorne weisen. Es werden also von den Teilrippen 15 am Hauptteil 11 und jenen am ringförmigen Teil 12 der Riffelrolle 10 gewinkelte Rippen 16 gebildet, wobei die Teilrippen 15 miteinander einen stumpfen Winkel einschließende Schenkel dieser Rippen 16 bilden.

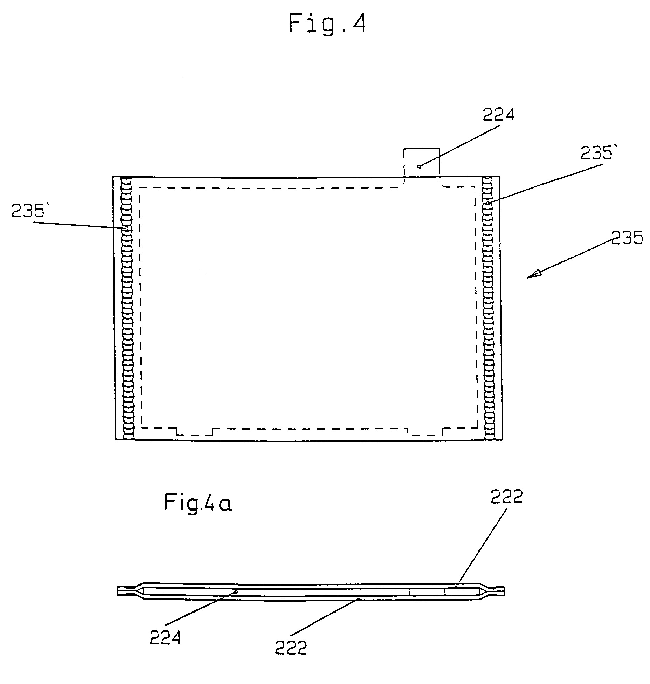

Die Flanken 22 jeder Teilrippe 15 schließen miteinander einen im wesentlichen rechten Winkel ein (vgl. Fig. 4).

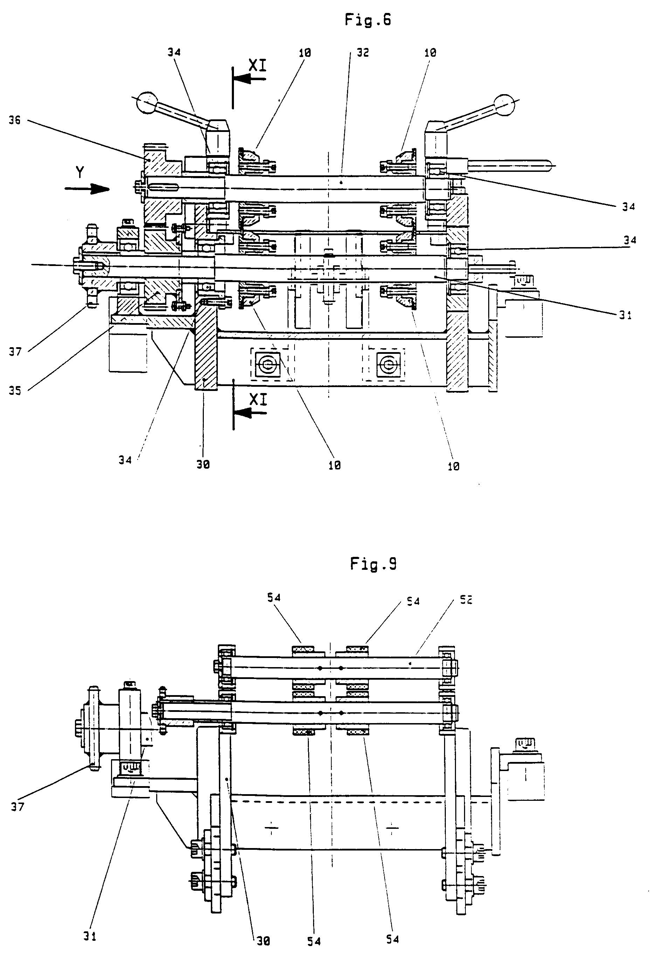

Die in den Fig. 6 bis 11 gezeigte Vorrichtung besitzt ein Gestell 30, das aus mehreren Teilen zusammengeschweißt ist und das seinerseits in einem Maschinengrundrahmen befestigt werden kann.

Im Gestell 30 sind übereinander zwei Wellen 31 und 32 in Lagern 34 gelagert. Im gezeigten Ausführungsbeispiel sind die beiden Wellen 31 und 32 in einer in der Gebrauchslage lotrechten Ebene übereinanderliegend angeordnet.

Die Welle 31 trägt an ihrem Ende ein Zahnrad 35, das ein Zahnrad 36 kämmt, das an der Welle 32 befestigt ist. Zum Antrieb der unteren Welle 31 ist an dieser ein Kettenzahnrad 37 befestigt, das über eine Rollenkette mit einem nicht näher gezeigten Antriebsmotor verbunden ist. So wird die Welle 31 vom Antrieb direkt angetrieben, wogegen die Welle 32 über das Zahnradpaar 35, 36 mittelbar angetrieben wird. Die Wellen 31, 32 drehen sich synchron und gegensinnig.

Auf jeder Welle 31, 32 sind zwei Riffelrollen 10 der oben, anhand der Fig. 1 bis 3 beschriebenen Bauart aufgekeilt, wie dies in Fig. 6 ersichtlich ist. Der in Richtung der Achsen der Wellen 31 bzw. 32 gemessene Abstand der Riffelungen der Riffelrollen 10, die von den gewinkelten Rippen 16 (bestehend jeweils aus zwei Teilrippen 15) gebildet werden, entspricht der Breite des Streifens aus Separatormaterial, der um eine Batterieplatte herumgefaltet worden ist, so daß die Riffelrollen 10 jeweils im Bereich der Seitenränder der Taschen angreifen.

Der Abstand der Wellen 31 und 32 voneinander ist so gewählt, daß die Rippen 16 jedes Paares von Riffelrollen 10 mit einem entsprechend der Stärke des zu verarbeitenden Separatormaterials gewählten Abstand (Spiel) ineinandergreifen.

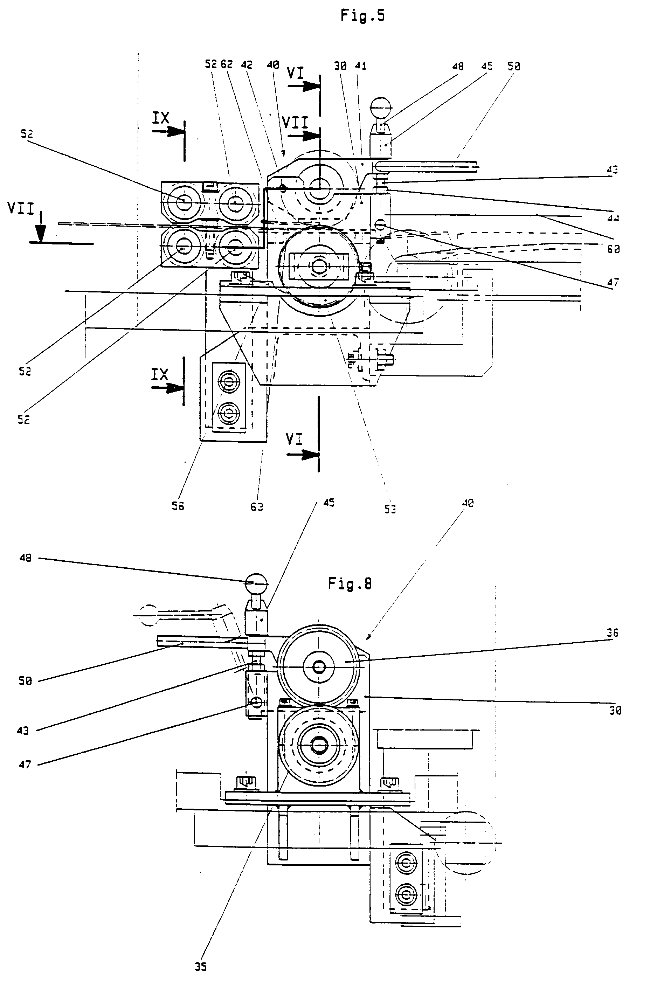

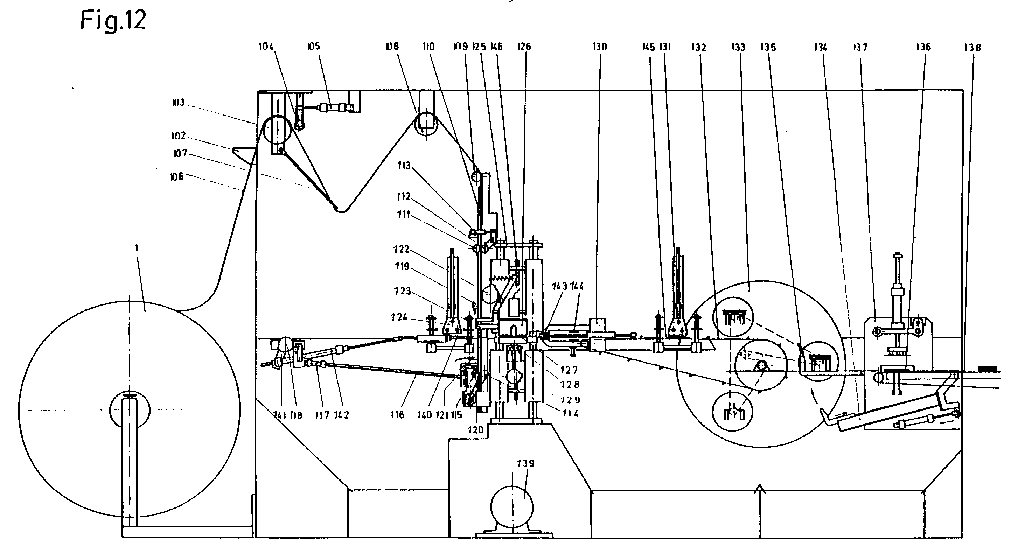

Wie insbesondere die Fig. 5 und die Schnittdarstellung von Fig. 11 zeigen, ist die Welle 32 in einem Träger 40 gelagert, der von zwei Lagerschilden 41 gebildet wird. Diese Lagerschilde 41 sind um Zapfen 42 am Gestell 30 verschwenkbar. Die in Fig. 5 gezeigte Stellung des von den beiden Lagerschilden 41 gebildeten Trägers 40 wird durch Stellschrauben 43 definiert, die in das Gestell 30 eingeschraubt und in der gewünschten Stellung durch eine Gegenmutter 44 gesichert werden.

In der in Fig. 5 gezeigten, eingeschwenkten Stellung des Trägers 40 wird dieser durch zwei Spannschrauben 45 gehalten, die in am Gestell 30 eingesetzte Bolzen 47 nach dem Lösen mit Hilfe des Handhebels 48 ausschwenkbar sind. Die ausgeschwenkte Stellung ist in Fig. 8 strichpunktiert eingezeichnet. Um das Hochklappen des Trägers 40 nach dem Lösen der Spannvorrichtungen mit den Spannschrauben 45 zu erleichtern, ist an einem Lagerschild 41 ein weiterer Handgriff 50 befestigt.

Neben den beiden Wellen 31 und 32 mit den paarweise angeordneten Riffelrollen 10 sind im Gestell 30 vier weitere Wellen 52 gelagert, die über Rollenketten und Kettenzahnräder 56, 57 und 58, ausgehend von einem Kettenzahnrad 53, das auf der Welle 31 festgelegt ist, angetrieben werden.

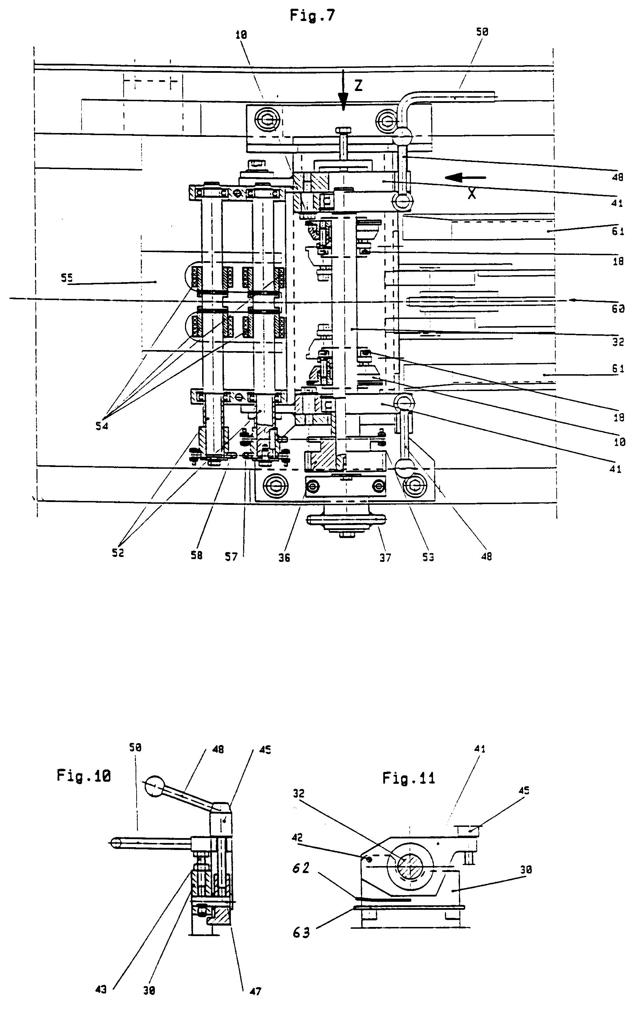

Auf den Wellen 52 sitzen Reibwalzen 54, die auf einer gabelförmigen Einschubplatte 55 von einer nicht näher gezeigten Einschubvorrichtung zugeführte, mit einem Streifen aus Separatormaterial, der an seinen Längsrändern zu verbinden ist, umhüllte Batterieplatten erfassen und zwischen Führungsbleche 62 und 63 hineinschieben (siehe Fig. 5 und 11). Die Batterieplatte mit dem um sie herumgefalteten Streifen aus Separatormaterial wird zwischen den Führungsblechen 62 und 63 zu den Riffelrollen 10 transportiert und von diesen erfaßt. Während des Weitertransportes werden in den beiden von der Faltstelle im Streifen ausgehenden Längsrändern des um die Batterieplatte gefalteten Streifens aus Separatormaterial Prägungen entsprechend der Form der Rippen 16 an den Riffelrollen 10 erzeugt und die Längsränder so miteinander verbunden, so daß aus den gefalteten Streifen aus Separatormaterial eine Tasche entsteht, in der eine Batterieplatte aufgenommen ist. Die in der Einleitung dieser Beschreibung erwähnte Verbindung der Längsränder von Streifen aus Separatormaterial zu Taschen durch eine reib- und formschlüssige Verbindung wird beispielsweise mit 4 mm breiten Riffelwalzen 10 erreicht, indem diese mit 200 bis 350 kg auf Separatormaterial mit einer Stärke von 0,25 mm gedrückt werden. Die Tasche wird zu einem in Fig. 7 angedeuteten Abförderer 60 bewegt. Auf diesem Förderer 60 wird die eingetaschte Batterieplatte von seitlichen Führungen 61 geführt, durch einen Kettenförderer mit Mitnehmern weggeschoben und beispielsweise zu einer Stapelvorrichtung bewegt, wie sie aus der weiter oben genannten EP-B-300 991 oder der EP-B-397 640 bekannt ist.

Wie in Fig. 7 angedeutet, kann der Abstand der Riffelrollen 10 auf den Wellen 31 bzw. 32 voneinander nach dem Lösen der Schrauben 18 durch Verschieben der Riffelrollen 10 entlang der Wellen 31 und 32 der Breite der herzustellenden Tasche angepaßt werden.

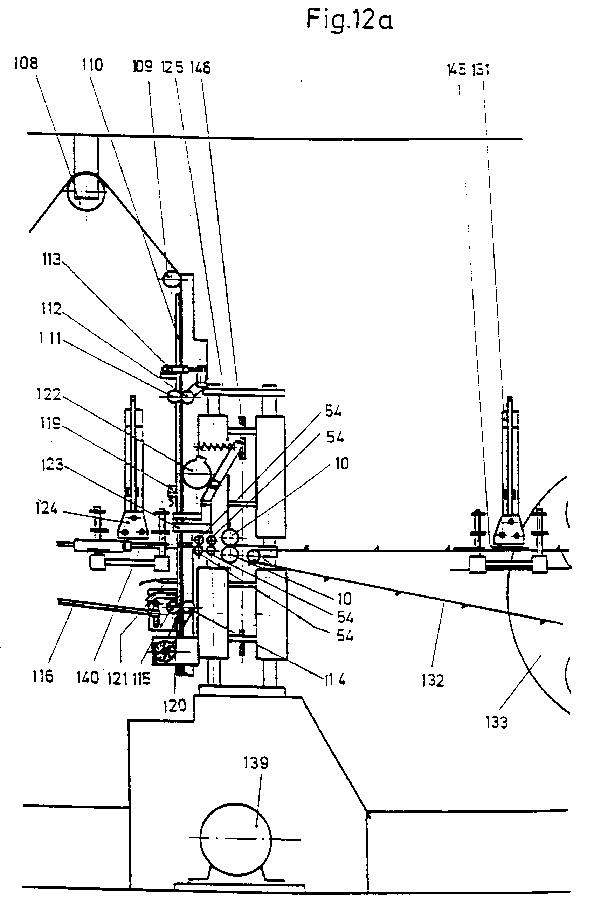

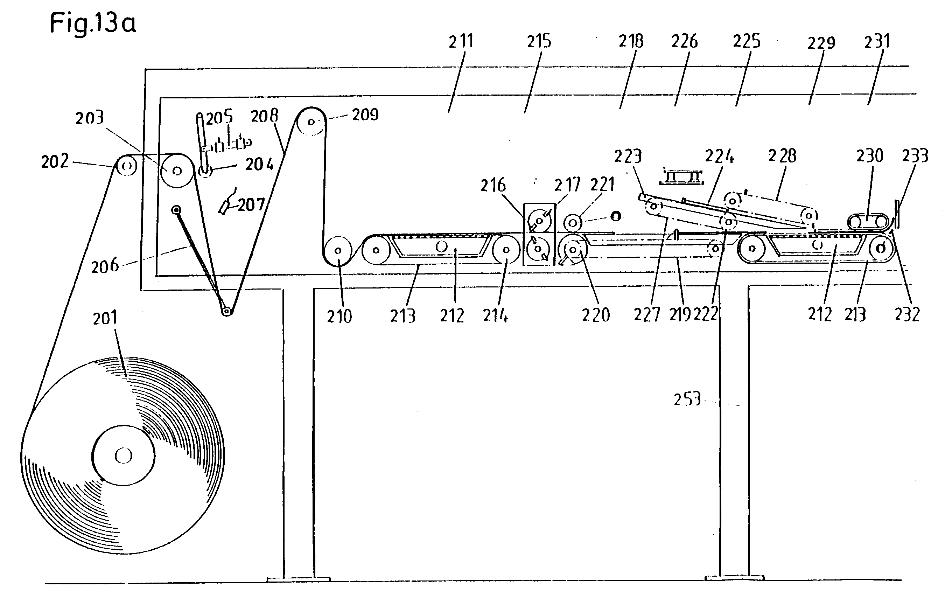

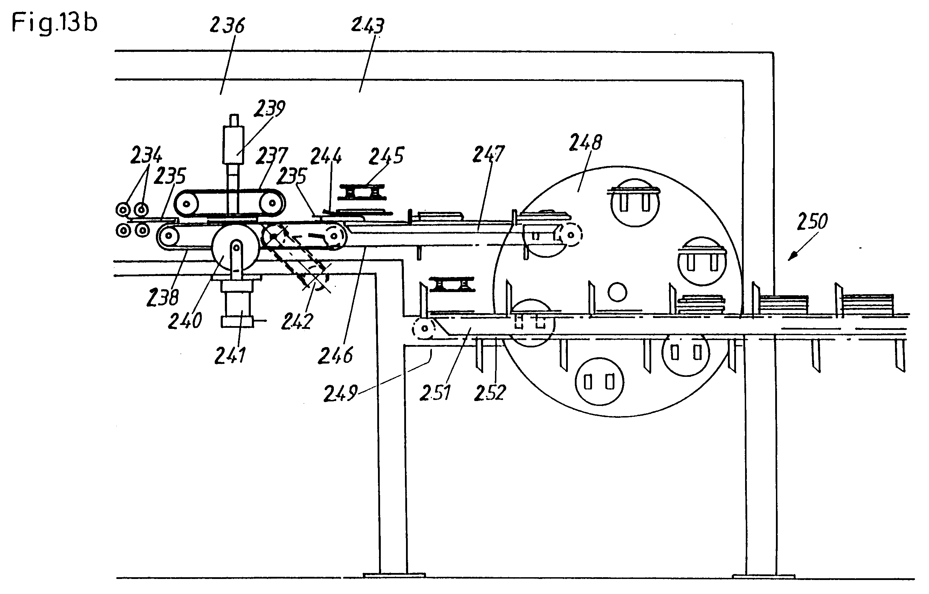

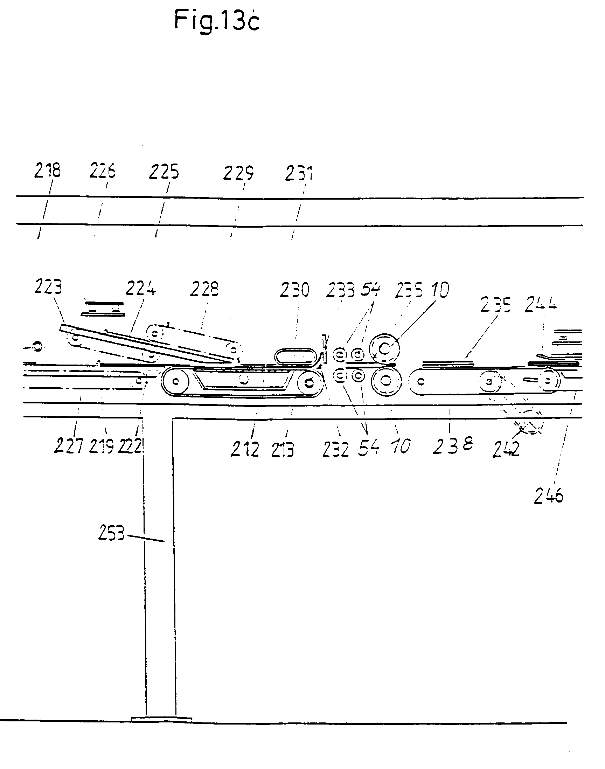

Die in Fig. 12 und 13 gezeigten Vorrichtungen entsprechen mit Ausnahme der Stationen, in welchen die Längsränder von um eine Batterieplatte herumgefalteten Streifen aus Separatormaterial miteinander verbunden werden, den aus der EP-A-300 991 bzw. der EP-A-397 640 bekannten Vorrichtungen. Die erwähnten Stationen, die in den bekannten Vorrichtungen Schweißvorrichtungen, beispielsweise Ultraschallschweißvorrichtungen sind, sind in den gezeigten Ausführungsformen durch Vorrichtungen ersetzt, welche mit den erfindungsgemäß vorgeschlagenen Riffelrollen 10 (Fig. 1 bis 3) arbeiten und beispielsweise die oben an Hand der Fig. 5 bis 11 erläuterte Konstruktion besitzen. Bezüglich der übrigen Konstruktion und der Arbeitsweise der in den Fig. 12 und 13 gezeigten Vorrichtungen wird auf die Ausführungen in der EP-B-300 991 bzw. der EP-B-397 640 und die nachstehende Beschreibung verwiesen:
Ein Separatorband 106, in das positive oder negative Batterieplatten eingetascht werden sollen, wird bei der in Fig. 12 gezeigten Vorrichtung von einer Vorratsspule 101, die im Maschinengestell drehbar gelagert ist, abgezogen. Hiezu ist eine als Förderrolle 103 dienende Umlenkrolle vorgesehen, der eine Andrückwalze 104 zugeordnet ist. Die Andrückwalze 104 sichert, wenn sie über das Separatorband 106 gegen die Förderrolle 103 gedrückt wird, den Abzug von Separatorband 106 von dessen Vorratsspule 101. Um die Andrückwalze 104 gegen die Förderrolle 103 drücken zu können, ist diese über Lenker im Maschinengestell um eine horizontale Achse verschwenkbar gelagert, wobei die Schwenkbewegung durch einen Pneumatikzylinder 105 bewirkt wird.

Nach der Förderrolle 103 bildet das Separatorband 6 eine nach unten hängende Schlaufe, die zu einer Umlenkrolle 108, die im Maschinengestell um eine ortsfeste Achse drehbar gelagert ist, führt. Unter der Förderrolle 103 ist ein beispielsweise bügelartig ausgebildeter Fühlhebel 107 im Maschinengestell verschwenkbar gelagert, dessen Schwenklage durch die Größe der Schlaufe des Separatorbandes 106 bestimmt wird. Wird der Bügel beim Verkleinern der Schlaufe des Separatorbandes 106 über ein vorgegebenes Maß nach oben verschwenkt, dann wird von einer Folgesteuerung ausgelöst, daß die Andrückwalze 104 vom Pneumatikzylinder 105 gegen das über die Förderrolle 103 laufende Separatorband 106 gedrückt und dieses von der Vorratsspule 101 abgezogen wird.

Vor der Förderrolle 103 sind noch zwei am Maschinengestell befestigte Bleche 102 vorgesehen, welche die seitliche Führung des Separatorbandes 106 bewirken.

Von der Umlenkrolle 108 gelangt das Separatorband 106 über eine weitere Umlenkrolle 109 in einen maschinengestellfest montierten Kanal 110, der sich vertikal von oben nach unten erstreckt. Am unteren Ende des Kanals 110 ist ein Anschlag 120 vorgesehen, der zu einem noch zu erläuternden Zweck aus seiner den Kanal 110 unten verschließenden Lage ausgeschwenkt werden kann.

Der Kanal 110 weist ein oberes Rollenpaar, bestehend aus den Rollen 111 und 112, sowie ein unteres Rollenpaar, bestehend aus den Rollen 114 und 115, auf. Dabei sind die Rollen 111 und 114 um ortsfeste Achsen drehbar gelagert und mit Antrieben ausgestattet. Die Rollen 112 und 115 sind frei drehbar und so gelagert, daß ihr Abstand von den ihnen zugeordneten, angetriebenen Rollen 111 bzw. 114 vergrößert bzw. verkleinert werden kann. Hiezu ist der oberen Rolle 112 ein Pneumatikzylinder 113 zugeordnet, der die Rolle 112 über das Separatorband 106 gegen die angetriebene Rolle 111 drückt oder von dieser abhebt. Die der angetriebenen Rolle 114 zugeordnete, frei drehbare Rolle 115 ist im Maschinengestell an einem Winkelhebel gelagert, der durch ein Gestänge 116 zum Abheben der Rolle 115 vom Separatorband bzw. der Rolle 114 verschwenkbar ist. Das Verschwenken des die Rolle 115 tragenden Winkelhebels erfolgt durch Bewegungen des Gestänges 116, das von einer Nockenscheibe 118, die um eine im Maschinengestell angeordnete, horizontale Achse drehbar gelagert ist, bewegt wird.

Im unteren Bereich des Kanals 110 ist noch ein die Anwesenheit von Separatorband 106 erfassender Signalgeber 121 vorgesehen. Wenn das vordere Ende des Separatorbandes 106 den Signalgeber 121 erreicht, wird die frei drehbare Rolle 112 durch Betätigen des Pneumatikzylinders 113 von der ständig angetriebenen Rolle 111 abgehoben, so daß das Separatorband 106 nun ausschließlich durch die ständig angetriebene Rolle 114 weitergefördert wird. Der Anpreßdruck der der Rolle 114 zugeordneten, frei drehbaren Rolle 115 ist so gering gewählt, daß das Separatorband 106 beim Erreichen des Anschlages 120 keine Wellen oder Falten bildet, sondern gerade im Kanal 110 stehen bleibt. Aus diesem Grund wird auch der Transportwiderstand der Umlenkrollen 108 und 109 möglichst klein gehalten, sonst würden bei größerem Anpreßdruck der Förderrollen 114 und 115 Längenunterschiede der vom Separatorband 106 abgelängten Separatorbandstücke auftreten.

Sobald das vordere Ende des im Kanal 110 befindlichen Separatorbandes 106 den Anschlag 120 erreicht hat, wird durch eine Nockenscheibe 122 eine Schere 123 betätigt und längt vom Separatorband 106 ein Separatorbandstück ab.

Wie aus der Zeichnung ersichtlich, ist neben dem Kanal 110 eine Vorrichtung 124 zum Auflegen einer Batterie- oder Akkumulatorplatte (positive oder negative Platte) auf ein in der Vorrichtung in einer Horizontalebene vor- und zurückschiebbares Faltblech 140 vorgesehen. Die als Plattenleger dienende Vorrichtung 124 kann ein Magazin für plattenförmige Gegenstände sein, wie dies aus den AT-B-241 565, 329 124, 352 198 und insbesondere der EP-A-141 806 bekannt ist.

Beim Vorschieben des Faltbleches 140 mit einer darauf liegenden Akkumulatorplatte wird das zuvor vom Separatorband 106 abgelängte Separatorbandstück um die Platte herum gelegt und in seiner Längsmitte gefaltet. Bevor das Faltblech 140 das zu faltende Separatorbandstück berührt, wird die nur leicht gegen die Rolle 114 gedrückte Rolle 115 durch ihr Gestänge 116 von der Nockenscheibe 118 ausgeschwenkt, um den Faltvorgang nicht zu behindern.

Von Herstellern von Separatorband 106 werden fehlerhafte Stellen in diesem üblicherweise durch auf dem Separatorband 106 angebrachte Farbmarken gekennzeichnet. Um derartige fehlerhafte Separatorbandbereiche nicht zum Eintaschen von Batterie-oder Akkumulatorplatten zu verwenden, ist dem Kanal 110 ein Lesegerät 119 für Farbmarken zugeordnet. Erfaßt das Lesegerät 119 eine derartige Farbmarke, dann wird der Anschlag 120 am unteren Ende des Kanals 110 weggeschwenkt, wobei aber die Rolle 115 nicht wegschwenkt. Dies wird erreicht, indem gleichzeitig ein in das Gestänge 116 eingebauter Pneumatikzylinder 117 den Hub der Nockenscheibe 118 ausgleicht, so daß der schadhafte oder fehlerhafte Separatorbandbereich, der zuvor vom übrigen Separatorband 106 durch die Schneidvorrichtung 123 abgeschnitten worden ist, aus dem Kanal 110 herausgefördert wird. Um den Hub der Nockenscheibe 118 wirkungslos zu machen, wird der Pneumatikzylinder 117 im gegebenen Zeitpunkt so mit Druckluft beaufschlagt, daß sich das Gestänge 116 um ein entsprechendes Stück verlängert, so daß die am kanalseitigen Ende des Gestänges 116 vorgesehene Betätigungsrolle den Winkelhebel, der die frei drehbare Rolle 115 trägt, nicht verschwenkt.

Um eine in diesem Fall nicht benötigte und das Herausfördern des fehlerhaften Separatorbandstückes behindernde Betätigung des Faltbleches 140 zu verhindern, d.h. zu verhindern, daß sich das Faltblech 140 durch den quer zur Längserstreckung des Kanals 110 ausgerichteten Schlitz bewegt, wird ein in der Pleuelstange, die das Faltblech 140 mit dem Kurbeltrieb 141 verbindet, vorgesehener Pneumatikzylinder 142 so mit Druckluft beaufschlagt, daß er den Hub des Kurbeltriebes 141 absorbiert. Der Pneumatikzylinder 142 ist aus Festigkeitsgründen und um eine aufwendige Teleskopführung zu ersparen, so ausgebildet, daß als Pleuelstange ein Pneumatikzylinder 142 mit durchgehender Kolbenstange verwendet wird.

Zum Einstellen der richtigen Länge der vom Separatorband 106 abzulängenden Separatorbandstücke ist die Schneidvorrichtung 123 und der Anschlag 120 durch eine Schnittlängeneinstellvorrichtung 125 auf die jeweils gewünschte bwz. benötigte Schnittlänge einstellbar. Hiezu sind die auf vertikalen Führungsstangen verschiebbaren Träger für die Schneidvorrichtung 123 und den Anschlag 120 mit Hilfe einer Gewindespindel 146, die mit Links- und Rechtsgewinde ausgestattet ist, verstellbar.

Die wie oben beschrieben, in das gefaltete Separatorbandstück eingeschlagene Batterie- oder Akkumulatorplatte wird auf der dem Plattenleger 124 gegenüberliegenden Seite des Kanals 110 von einer Ausziehvorrichtung 130, u.zw. von den an dieser vorgesehenen Backen 143, erfaßt und in den Bereich der Schweißstation 126 gezogen.

Zum Verbinden der aufeinanderliegenden Längsränder des gefalteten Separatorbandstückes ist bei der EP-A-300 991 eine Ultraschallvorrichtung 126 vorgesehen, deren Ambosse 127 von unten her durch eine Nocke 129 bis zu den oberhalb der eingetaschten Akkumulatorplatte angeordneten Schweißhörnern der Schweißvorrichtung 126 angehoben werden können. Der Anpreßdruck der Ambosse 127 kann durch den Resthub der Nocke 129 und/oder durch den in einer pneumatischen Feder 128 herrschenden Druck eingestellt werden. Die pneumatische Feder 128 überträgt den Hub der Nocke 129 auf die Ambosse 127 der Schweißvorrichtung 126. Die Ultraschallschweißvorrichtung 126 kann wie in Fig. 12a gezeigt, durch die erfindungsgemäße Vorrichtung mit den beiden Paaren von Riffelrollen 10 und den Zufuhrrollen 54 ersetzt sein. Die Konstruktion der erfindungsgemäßen Vorrichtung ist im übrigen so wie oben anhand der Fig. 1 bis 11 erläutert, ausgebildet.

Nachdem die beiden Längsränder des um die Batterie- oder Akkumulatorplatte herumgefalteten Separatorbandstückes miteinander verbunden worden sind, wird die so hergestellte Tasche von der Ausziehvorrichtung 130, und zwar von ihren Klemmbacken 144 erfaßt und aus dem Bereich der Vorrichtung zum Verbinden der Längsränder herausgezogen. Gleichzeitig wird von den vorderen Klemmbacken 143 der Ausziehvorrichtung 130 eine weitere Batterie-oder Akkumulatorplatte mit herumgefaltetem Separatorbandstück in den Bereich der Vorrichtung zum Verbinden der Längsränder gezogen. Da bei Verwendung der erfindungsgemäßen Vorrichtung die Längsränder der gefalteten Streifen aus Separatormaterial miteinander im Durchlauf verbunden werden, kann die Ausziehvorrichtung 130, wie ebenfalls in Fig. 12a gezeigt, entfallen. Die Taschen werden dann von der erfindungsgemäßen Vorrichtung einfach auf die Plattentransportkette 132 oder den oben erläuterten Abförderer 60 geschoben.

Die Klemmbacken 144 der Ausziehvorrichtung 130 ziehen die Taschen bis auf zwei Gleitschienen. Von hier aus wird die Tasche beim nächsten Hub der Ausziehvorrichtung 130 durch an der Ausziehvorrichtung 130 befestigte und sich mit dieser hin-und herbewegende Haken auf einen Endlosförderer, z.B. eine Transportkette 132 mit nach außen weisenden Mitnehmern geschoben. Die Transportkette 132 kann als Rollenkette, vorzugsweise in Form von zwei nebeneinanderliegenden Rollenketten, ausgebildet sein.

Dem oberen Trum der Rollenkette 132 ist noch eine Plattenlegerstation 131 zugeordnet, welche die gleiche Bauart haben kann wie die Plattenlegerstation 124, und mit der Mittelplatten - d.h. Platten der den eingetaschten Akkumulatorplatten entgegengesetzten Polarität - auf Ablageleisten 145, die knapp oberhalb des oberen, sich horizontal bewegenden Trums der Rollenketten 132 befinden, abgelegt. Wenn nun eine Taschte mit einer Batterie- oder Akkumulatorplatte an den Mitnehmern der Transportkette 132 anliegend, unter den Ablageleisten 145 hindurchbewegt wird, nehmen die Mitnehmer die auf der Ablageleiste 145 liegende Akkumulatorplatte mit, so daß diese nach den Ablageleisten 145 auf der Tasche aufliegend von der Transportkette 132 weiterbefördert wird. Hiezu haben die Mitnehmer an der Transportkette 132 eine Höhe, die hinreicht, daß sie die auf die Ablageleisten 145 abgelegte Platte von diesen abstreifen.

Dem abgabeseitigen Ende der Förderkette 132 ist ein Scheibenrad 133 zugeordnet, das als Vorrichtung zum Übereinanderstapeln der von der Transportkette 132 herangeförderten Akkumulatorplatten dient. Das Scheibenrad 133 kann eine Konstruktion besitzen, wie sie aus der AT-B-355 500 bekannt ist. Vom Scheibenrad 133 werden die auf der Transportkette 132 herangeförderten Akkumulatorplatten paarweise - d.h. Paare, die jeweils aus einer Tasche und einer nicht eingetaschten Platte bestehen - auf einen Sammelrost 135 umgesetzt.

Sobald am Sammelrost 135 ein Stapel mit der gewünschten Anzahl von Batterie- oder Akkumulatorplatten gebildet worden ist, wird der Plattenstapel ("Block") durch eine im Maschinengestell nach oben verschwenkbar gelagerte Blockausziehvorrichtung 134 vom Sammelrost 135 auf quer verstellbare Leisten 136, die sich in diesem Zeitpunkt in ihrer oberhalb eines Auslauftransportbandes befindlichen Stellung befinden, geschoben. Bevor dies geschieht, wurde bei noch nicht vorgeschobenen Leisten 136, d.h. Leisten, die sich seitlich des Auslauftransportbandes 138 (z.B. ein Rollenkettenpaar) befinden, von einem Endplattenleger 137 eine Endplatte auf das Auslauftransportband 138 abgelegt. Sobald von der Blockausziehvorrichtung 134 ein Stapel Batterie- oder Akkumulatorplatten auf die Leisten 136 gelegt worden ist, werden die Leisten 136 seitlich zurückgezogen und der Stapel fällt auf die am Transportband 138 liegende Endplatte. Hierauf bewegt sich das Transportband 138 um einen Schritt weiter. Nachdem sich das Transportband 138 um einen Takt weiter bewegt hat, wird vom Endplattenleger 137 eine weitere Endplatte auf das Transportband 138 abgelegt und die Leisten 136 wieder über das Transportband 138 und die darauf befindliche Endplatte eingeschwenkt und der nächste Stapel aus Batterie- oder Akkumulatorplatten kann von der Blockausziehvorrichtung 134 vom Sammelrost 135 weg auf die Leisten 136 gezogen werden.

Es ist noch darauf hinzuweisen, daß der Antrieb der erfindungsgemäßen Vorrichtung wegen der richtigen Synchronisation der Bewegungen der verschiedenen Teile derselben mit Vorteil durch einen einzigen Antriebsmotor 139 erfolgt.

Sämtliche "Förderrollen" oder "Walzen" der beschriebenen Vorrichtung können durchgehende Walzen sein oder aus zwei oder mehreren Rollen bestehen.

Ein Separatorband 208 wird bei der in Fig. 13a und 13b gezeigten Vorrichtung von einer Vorratsspule 201 über ein Umlenkrad 202 abgezogen und über eine ständig angetriebene Transportrolle 203 geführt. Gesteuert durch die Schlaufensteuerung 206 (siehe auch EP-B-300 991) und einen Sensor 207 wird eine Rolle 204 durch einen Druckmittelzylinder 205 gegen die Transportrolle 203 gedrückt. Durch die so gebildete Schlaufe aus Separatorband 208 kann das Separatorband 208 über weitere Umlenkrollen 209 und 210 in die Vorrichtung eingeführt werden.

Von der Umlenkrolle 210 gelangt das Separatorband 208 zu einer Vorrichtung 211 zum Zuführen von Separatorband 208. Diese Vorrichtung 211 besitzt ein über zwei Walzen 214 geführtes endloses Förderband 213, das perforiert ist und beispielsweise als Gewebeband ausgebildet ist. Zwischen den beiden Trumen des perforierten Förderbandes 213 ist eine Kammer 212 vorgesehen, die an ihrer an der Unterseite des oberen Trums des Förderbandes 213 anliegenden Fläche Öffnungen aufweist und die an eine Unterdruckquelle angeschlossen ist. Das Separatorband 208 wird so gegen das Förderband 213 der Vorrichtung 211 gesaugt und in eine Schneidvorrichtung 215 geschoben.

Die Schneidvorrichtung 215 besteht aus zwei gegenläufig angetriebenen Messerwalzen, die je eine Schneidleiste 216 und gegenüber der Schneidleiste 216 um 180° versetzt, je eine Kerbleiste 217 aufweisen. Durch die Schneidleisten 216, die einander in der Wirkstellung etwas überlappen, wird vom Separatorband 208 ein Abschnitt 222 abgelängt. Zuvor wurde durch die Kerbleisten 217 genau in der Mitte des abzulängenden Abschnittes 222 Separatorband 208 eine Kerbe erzeugt, die an der Stelle des Abschnittes 222 liegt, um die der Abschnitt 222 später gefaltet wird. Durch die Kerbe im Abschnitt 222 Separatorband 208 wird eine größere Faltgenauigkeit erreicht und der unerwünschte "Baucheffekt" im Bereich der Faltkante des Separators vermindert.

Es besteht auch die Möglichkeit, Abschnitte 222 Separatorband 208 mit anderen Längen herzustellen, indem man die Vorschubgeschwindigkeit des Separatorbandes 208 bei gleichbleibender Drehgeschwindigkeit der Messerwalzen der Schneideinrichtung 215 wählt, was den Vorteil hat, daß sich die Maschinentaktzahl (= Drehzahl der Messerwalzen) bei verschiedenen Längen von Abschnitten 222 Separatorband 208 nicht ändert. Vom Zeitpunkt des Ergreifens des Separatorbandes 208 durch die Messerwalzen der Schneidvorrichtung 215 vor dem Schnitt bis zum Freiwerden staut sich Separatorband 208 vor den Messerwalzen bei längeren Abschnitten 222 etwas auf. Durch eine nach der Schneideinrichtung 215 vorgesehene Gummirolle 220, der eine von oben lose aufliegende Anpreßrolle 221 zugeordnet ist, wird das Separatorband 208 bis zum nächsten Ablängvorgang wieder geradegezogen.

Durch die erfindungsgemäße Ausbildung der Schneidvorrichtung 215 wird im Vergleich zu der in der EP-B-62 25 beschriebenen Querschneidevorrichtung ein glatterer Schnitt erzielt. Bei der Querschneidevorrichtung gemäß der EP-B-62 525 ist die Messergeschwindigkeit größer ist als die Vorschubgeschwindigkeit des Separatorbandes, wobei das Messer dort das Separatorband gegen eine glatte Walze abdrückt. Durch die höhere Geschwindigkeit des Messers wird der abgedrückte Separator, der noch an einigen Fasern am Separatorband hängt, abgerissen. Dabei wird das Separatorband bis zum Abreißen in unerwünschter Weise gezogen und gedehnt.

Die Rollen 220 und 221 sind am Anfang eines Rollenkettenförderers 219 angeordnet. Dabei zieht die Gummirolle 220 den Abschnitt 222 Separatorband 208 mit größerer Geschwindigkeit als die Bewegung der Rollenkette 219 und legt den Abschnitt 222 auf einer Leiste ab.

Von dieser Leiste wird der Abschnitt 222 durch einen Mitnehmer, der an den Rollenketten 219 montiert ist, mitgenommen. Dadurch ist gewährleistet, daß der bezogen auf die Förderrichtung hintere Rand jedes Abschnittes 222 Separatorband 208 unabhängig von der Länge dieses Abschnittes 222 bezüglich des gesamten Bewegungsablaufes in der Vorrichtung stets die gleiche Lage hat.

Von der mit Rollenketten 219 ausgestatteten Transportvorrichtung wird der Abschnitt 222 Separatorband 208 auf eine Fördervorrichtung 229 geschoben, deren endloses, perforiertes Förderband 213 (z.B. ein Gewebeband) etwas schneller läuft als die Transportvorrichtung (Rollenketten 219), damit die auf letzterem vorgesehenen Mitnehmer hinter dem Abschnitt 222 abtauchen können.

Über der Fördervorrichtung 229 ist eine Vorrichtung 225 zum Ablegen einzutaschender Batterie- oder Akkumulatorplatten 224 auf die auf dem Förderband 213 der Fördereinrichtung 229, dem eine Unterdruckkammer 212 ähnlich jener der Vorrichtung 211 zugeordnet ist, abgelegt werden kann. Diese Vorrichtung 225 besitzt Gleitschienen 223, auf die eine von einem Plattenstoß vereinzelte Platte 224 durch einen Plattenleger 226 aufgelegt wird. Die auf den Gleitschienen 223 liegende Platte 224 wird von einer Vorschubvorrichtung, die zwei Endloskettenförderer mit Ketten 227 und 228, die versetzt zueinander angeordnet sind, aufweist, entlang der Gleitschienen 223 geschoben.

Dabei wird die Batterie- oder Akkumulatorplatte 224 (z.B. eine Bleiplatte) von der als Obergurtmitnehmer wirkenden Kette 227 an die als Untergurtförderer wirkende Kette 228 übergeben, welch letztere die Platte 224 ohne Geschwindigkeitsänderung auf den sich darunter vorbeibewegenden Abschnitt 222 Separatorband 208 ablegt. Dabei kommt die Platte 224 mit ihrer Fußseite genau auf die Kerblinie in der Mitte des Abschnittes 222 zu liegen, wobei die Platte 224 auf dem in Laufrichtung gesehen hinteren Bereich des Abschnittes 222 liegt.

Dem abgabeseitigen Ende der Fördervorrichtung 229 ist ein Endlosförderglied 230 zugeordnet, das als Klemmband wirkt und den Abschnitt 222 Separatorband 208 bzw. später die auf diesem aufliegende Platte 226 unverrückbar auf dem Förderband 213 der Fördervorrichtung 229 festhält.

Am abgabeseitigen Ende der Fördervorrichtung 229 ist eine verschwenkbar gelagerte Umlenkplatte 232 einer Faltstation 231 vorgesehen, die den vorderen Teil des Abschnittes 222 nach oben umlenkt, so daß dieser an einer Leitplatte 233 nach oben gleitet. Sobald der Fußbereich der Platte 224 bei der Umlenkplatte 232 anlangt, wird diese von der steifer als der Abschnitt 222 ausgebildeten Platte 224 nach unten gedrückt und die Platte 224 wird mit um sie gefalteten Abschnitt 222 Separatorband 208 zwischen zwei Paar Klemmrollen 234 gedrückt. Dabei kann die in der Faltstation 231 angeordnete Leitplatte 233 ebenfalls etwas in Förderrichtung verschwenken, damit der an ihr anliegende Abschnitt 222 Separatorband 208 ohne Störungen an ihr vorbeigleiten kann.

Statt der verschwenkbaren Umlenkplatte 232 kann in der Faltstation 231 auch eine Düse vorgesehen sein, aus der im richtigen Zeitpunkt ein Luftstoß austritt, der das vordere Ende des Abschnittes 222 Separatorband 208 auf die Leitplatte 233 hin umlenkt.

Da sich durch das Herumfalten des Abschnittes 222 um die Platte 224 die Länge der nunmehr zu fördernden Anordnung 235 aus Platte 224 und Abschnitt 222 um die Hälfte verkürzt, kann die Transportgeschwindigkeit in der Vorrichtung 236 zum Verbinden der Seitenränder des gefalteten Abschnittes 222 verringert sein. Dies ist von Vorteil, da die Qualität der Verbindung der beiden Längsränder des gefalteten Abschnittes 222 bei kleinerer Fördergeschwindigkeit zunimmt. Die Anordnung 235 aus gefaltetem Abschnitt 222 und Platte 224 wird auf ein langsamer laufendes Förderband 238 geschoben und bei der aus der EP-B-397 640 bekannten Vorrichtung durch ein oberhalb des Förderbandes 238 vorgesehenes Klemmband 237 durch die Schweißstation 236 gefördert.

Die Schweißstation 236 der Vorrichtung gemäß der EP-B-397 640, die zu beiden Seiten des Klemmbandes 237 angetriebene Amboßräder 240 mit darüber befindlicher Ultraschallschweißsonotrode 239 aufweist, so daß die seitlich über die Platte 224 vorstehenden Seitenränder des thermoschweißbaren Separatorbandes 208 zwischen der Schweißsonotrode 239 und dem durch einen Druckmittelzylinder 241 dagegengedrückten Amboßrad 240 durchgezogen und mit Ultraschallschwingungen wärmeverschweißt werden, ist wie in Fig. 13c gezeigt, durch die erfindungsgemäße Vorrichtung mit den Riffelwalzen 10 und den Zufuhrrollen 54 ersetzt. Dabei ist die erfindungsgemäße Vorrichtung, wie ebenfalls in Fig. 13c gezeigt, zwischen den Förderbändern 213 und 238 angeordnet. Die erfindungsgemäße Vorrichtung besitzt im übrigen vorzugsweise die an Hand der Fig. 1 bis 11 beschriebene Ausführung.

Im Anschluß an das Förderband 238 ist ein nach unten abklappbares Förderband 242 vorgesehen, das abgeklappt wird, wenn schlechtes Separator- oder Plattenmaterial ausgeschieden werden soll. Das Abklappen des Förderbandes 242 erfolgt entweder automatisch, wenn in der Maschine Einrichtungen zum Erkennen von schlechtem Separator- oder Plattenmaterial vorgesehen sind, oder wird durch eine Bedienungsperson ausgelöst.

Im Anschluß an die erfindungsgemäße Vorrichtung mit den Riffelrollen 10 ist eine Einrichtung 243 zum Auflegen von Mittelplatten mit einem Plattenleger 245 vorgesehen. Durch den Plattenleger 245 werden vereinzelte Komplementärplatten auf einen Rost 244 abgelegt. Eine Mitnehmerkette 246 (Rollenkette mit Mitnehmern) streift die auf dem Rost 244 abgelegte Platte auf die darunter befindliche eingetaschte Platte 224 ab und das Plattenpaar wird auf einer Schiene 247 in eine Abstapelvorrichtung in Form eines Scheibenrades 248 (AT-B-355 500) transportiert, wobei vom Scheibenrad 248 die Plattenpaare in einer Blocklegestation zu den gewünschten Blockgrößen zusammengelegt werden.

Am aufgabeseitigen Ende eines Blockförderbandes 250 ist ein weiterer Plattenleger 249 für Endplatten vorgesehen. Die vom Plattenleger 249 vereinzelte Endplatte wird auf eine Gleitleiste 251 gelegt und von Mitnehmern der Rollenkette 252 des Blockförderbandes in die Blocklegestation gefördert. Somit kann, wie erforderlich, als erste Platte im Block ohne zusätzliche händische Maßnahmen eine Endplatte angeordnet werden. Am abgabeseitigen Ende des Blockförderers 250 werden die taktweise von der Rollenkette 252 mit Mitnehmern transportierten Blöcke aus der Maschine entnommen und der weiteren Verarbeitung zugeführt.

Bei der erfindungsgemäßen Vorrichtung können auch Maßnahmen vorgesehen sein, durch welche die miteinander zu verbindenden Längsränder des um eine Batterie- oder Akkumulatorplatte gefalteten Separatorbandstückes angewärmt werden können, um das Verbinden der Längsränder durch die Riffelrollen 10 zu unterstützen. So kann eine z.B. auf Infrarotbasis arbeitende Einrichtung vorgesehen sein, welche die Längsränder des Separatorbandabschnittes und/oder die Riffelrollen 10 (je eine Rolle oder beide Rollen eines Paares) anwärmt. Diese Einrichtung kann, wenn sie Riffelrollen 10 anwärmt, beispielsweise zwischen den oberen Riffelrollen 10 und über der diese tragenden Welle 32 (Fig. 6) vorgesehen sein. In bestimmten Fällen bewährt sich eine Blende, die verhindert, daß Infrarotstrahlung auf die Welle 32 oder andere Vorrichtungsteile trifft.

Eine andere Möglichkeit besteht darin, das Separatorband selbst anzuwärmen. Dies kann beispielsweise erfolgen, indem die Längsränder des Separatorbandes von einer oder von beiden Seiten her erwärmt werden, bevor das Separatorband in den Kanal 110 (Fig. 12a) eintritt, oder wenn es der Schneideinrichtung 215 (Fig. 13a) zugeführt wird. Das unmittelbare Erwärmen der Längsränder des Bandes kann auf beliebige Weise, so auch z.B. durch Konvektion (Warmluftgebläse) oder Strahlung (Infrarotstrahler) erfolgen.

Bevorzugt ist es bei bestimmten Separatorwerkstoffen, daß die Längsränder eine Temperatur im Bereich von 55 bis 70 °C, insbesondere eine Temperatur von 60 bis 65 °C haben, wenn sie Seitennähte mit Hilfe der erfindungsgemäßen Riffelrollen 10 erzeugt werden.

## Patentansprüche

1. Vorrichtung zum Herstellen von Taschen für Batterieplatten aus Kunststoffstreifen, insbesondere aus Streifen aus mikroporösem Polyolefin, mit paarweise angeordneten, den Längsrändern des um eine Batterieplatte herumgelegten Streifens zugeordneten, von beiden Seiten an den Längsrändern anliegenden Riffelrollen (10), wobei wenigstens einer Riffelrolle (10) jedes Paares ein Antrieb zugeordnet ist, und wobei die Riffelrollen (10) in einem Gestell (30, 40) drehbar gelagert sind, dadurch gekennzeichnet, daß die Riffelung der Riffelrollen (10) von gewinkelten Rippen (16) gebildet ist, daß wenigstens der die Rippen (16) tragende Teil der Riffelrollen (10) aus zwei Teilen (11, 12) besteht, die in einer zur Drehachse der Riffelrollen (10) senkrecht stehenden Ebene (14) aneinanderliegen, wobei die Spitzen (20) der Rippen (16) in dieser Ebene liegen und daß der eine Teil (11) der Riffelrolle (10) als Ring ausgebildet ist, der an der radial außen liegenden Fläche einer Ringschulter (13) des anderen Teils (12) der Riffelrolle (10) sitzt und von einem Druckring (17) gegen diesen Teil (12) gepreßt wird.

2. Vorrichtung nach Anspruch 1, dadurch gekennzeichnet, daß die Rippen (16) zu einer zur Drehachse der Riffelrollen (10) senkrecht stehenden Ebene (14), die durch die Mitte der Riffelrolle (10) geht, symmmetrisch gewinkelt sind.

3. Vorrichtung nach Anspruch 1 oder 2, dadurch gekennzeichnet, daß die Spitzen (20) der Rippen (16), bezogen auf die Drehrichtung (Pfeil 21) der Riffelrollen (10) nach vorne weisen.

4. Vorrichtung nach einem der Ansprüche 1 bis 3, dadurch gekennzeichnet, daß die dem Aufnahmeraum der zu bildenden Tasche für eine Batterieplatte benachbarte Kante (19) der Riffelrollen (10) abgefast ist.

5. Vorrichtung nach Anspruch 4, dadurch gekennzeichnet, daß die Fasung (22) mit einer zur Drehachse (19) der Riffelrollen (10) senkrecht stehenden Ebene einen Winkel von 15° bis 45° einschließt.

6. Vorrichtung nach einem der Ansprüche 1 bis 5, dadurch gekennzeichnet, daß die beiden Flanken jeder Rippe (16) miteinander einen Winkel von etwa 90° einschließen.

7. Vorrichtung nach einem der Ansprüche 1 bis 6, dadurch gekennzeichnet, daß die beiden Teilrippen (15) der Rippen (16) miteinander einen stumpfen Winkel einschließen.

8. Vorrichtung nach einem der Ansprüche 1 bis 7, mit zwei Paaren von Riffelrollen (10), die auf synchron und gegensinnig angetriebenen Wellen (31, 32) befestigt sind, wobei die Riffelungen bildenden Rippen (16) jedes Paares von Riffelrollen (10) ineinandergreifen, mit einem Gestell (30), in dem die Wellen (31, 32) gelagert sind, und mit einem Drehantrieb (35, 36, 37) für die Riffelrollen (10), dadurch gekennzeichnet, daß eine (31) der beiden Wellen (31, 32) mit dem Antrieb (37) gekuppelt ist, daß mit der Welle (31) ein Zahnrad (35) verbunden ist, das mit einem Zahnrad (36), das mit der anderen Welle (32) verbunden ist, kämmt, daß die mittelbar drehangetriebene Welle (32) in einem Träger (40) gelagert ist, der am Gestell (30) lösbar festgelegt ist, und daß der die mittelbar drehangetriebene Welle (32) tragende Träger (40) zur Vergrößerung des Abstandes zwischen den Riffelrollen (10) eines Paares um eine zu den die Riffelrollen (10) tragenden Wellen (31, 32) parallele Achse abklappbar ist.

9. Vorrichtung nach Anspruch 8, dadurch gekennzeichnet, daß der die mittelbar angetriebene Welle (32) tragende Träger (40) von zwei Lagerschilden (41) gebildet wird, die mit einem Zapfen (42) verschwenkbar am Gestell (30) gelagert sind, und daß die eingeschwenkte Stellung der Lagerschilde (41) durch wenigstens zwei Stellschrauben (43), die an den Lagerschilden (41) angreifen, definiert ist.

10. Vorrichtung nach Anspruch 9, dadurch gekennzeichnet, daß eine Einrichtung zur Sicherung der Lagerschilde (41) in ihrer eingeschwenkten Stellung vorgesehen ist, beispielsweise jedem Lagerschild (41) eine Spannschraube (45) zugeordnet ist.

## Claims

1. Apparatus for producing compartments for battery plates made of plastic strips, in particular strips of microporous polyolefin, with fluted rollers (10) arranged in pairs, which are associated with the longitudinal edges of the strip laid around a battery plate and which abut against the longitudinal edges from both sides, wherein a drive is associated with at least one fluted roller (10) of each pair, and wherein the fluted rollers (10) are mounted rotatably in a frame (30, 40), characterised in that the fluting of the fluted rollers (10) is formed by angled ribs (16), in that at least the portion of the fluted rollers (10) carrying the ribs (16) consists of two portions (11, 12) which abut against each other in a plane (14) perpendicular to the axis of rotation of the fluted rollers (10), wherein the tips (20) of the ribs (16) lie in this plane, and in that one portion (11) of the fluted roller (10) is constructed as a ring which is seated on the radially outer surface of an annular shoulder (13) of the other portion (12) of the fluted roller (10) and pressed by a thrust ring (17) against this portion (12).

2. Apparatus according to claim 1, characterised in that the ribs (16) are angled symmetrically to a plane (14) which is perpendicular to the axis of rotation of the fluted rollers (10) and which passes through the centre of the fluted roller (10).

3. Apparatus according to claim 1 or 2, characterised in that the tips (20) of the ribs (16) point forwards, referred to the direction of rotation (arrow 21) of the fluted rollers (10).

4. Apparatus according to any of claims 1 to 3, characterized in that the edge (19) of the fluted rollers (10) adjacent to the holding chamber of the compartment to be formed for a battery plate is chamfered.

5. Apparatus according to claim 4, characterised in that the chamfer (22) forms, with a plane perpendicular to the axis of rotation (19) of the fluted rollers (10), an angle of 15° to 45°.

6. Apparatus according to any of claims 1 to 5, characterised in that the two flanks of each rib (16) form with each other an angle of about 90°.

7. Apparatus according to any of claims 1 to 6, characterised in that the two partial ribs (15) of the ribs (16) form with each other an obtuse angle.

8. Apparatus according to any of claims 1 to 7, with two pairs of fluted rollers (10) which are mounted on shafts (31, 32) driven synchronously and in opposite directions, wherein the flute-forming ribs (16) of each pair of fluted rollers (10) engage in each other, with a frame (30) in which the shafts (31, 32) are mounted, and with a rotary drive (35, 36, 37) for the fluted rollers (10), characterised in that one (31) of the two shafts (31, 32) is coupled to the drive (37), in that connected to the shaft (31) is a gear (35) which meshes with a gear (36) which is connected to the other shaft (32), in that the indirectly rotated shaft (32) is mounted in a support (40) which is fixed releasably to the frame (30), and in that the support (40) carrying the indirectly rotated shaft (32) can be folded down about an axis parallel to the shafts (31, 32) carrying the fluted rollers (10) to increase the distance between the fluted rollers (10) of a pair.

9. Apparatus according to claim 8, characterised in that the support (40) carrying the indirectly driven shaft (32) is formed by two end plates (41) which with a journal (42) are mounted pivotably on the frame (30), and in that the pivoted-in position of the end plates (41) is defined by at least two set screws (43) which engage the end plates (41).

10. Apparatus according to claim 9, characterised in that a device is provided for securing the end plates (41) in its pivoted-in position, for example, a clamping screw (45) is associated with each end plate (41).

## Revendications

1. Dispositif pour fabriquer des poches pour des plaques de batterie à partir de bandes de matériau synthétique, en particulier à partir de bandes de polyoléfine microporeuse, avec des molettes cannelées (10) disposés par paires qui sont associés aux bords longitudinaux de la bande placée autour d'une plaque de batterie et sont appliqués sur les deux faces sur les bords longitudinaux, un moyen d'entraînement étant associé à au moins une molette cannelée (10) de chaque paire et les molettes cannelées (10) étant montées tournantes dans un bâti (30, 40), caractérisé par le fait que les cannelures des molettes cannelées (10) sont formées par des nervures (16) coudées, par le fait qu'au moins la partie des molettes cannelées (10) portant les nervures (16) est constituée de deux éléments (11, 12) qui sont appliqués l'un contre l'autre dans un plan (14) perpendiculaire à l'axe de rotation des molettes cannelées (10), les sommets (20) des nervures (16) étant situés dans ce plan, et par le fait que l'un des éléments (11) de la molette cannelée (10) est agencé sous la forme d'une bague qui repose sur la surface située radialement à l'extérieur d'un épaulement (13) annulaire de l'autre élément (12) de molette cannelée (10) et est presse contre ledit élément (12) par une bague de pression (17).

2. Dispositif selon la revendication 1, caractérisé par le fait que les nervures (16) sont coudées de manière symétrique en direction d'un plan (14) qui est perpendiculaire à l'axe de rotation des molettes cannelées (10) et passe par le milieu de la molette cannelée (10).

3. Dispositif selon la revendication 1 ou la revendication 2, caractérisé par le fait que, rapporté au sens de rotation (flèche 21) des molettes cannelées (10), les sommets (20) des nervures (16) sont orientés vers l'avant.

4. Dispositif selon l'une des revendications 1 à 3, caractérisé par le fait que le bord (19) des molettes cannelées (10) voisin de l'espace récepteur de la poche à former destinée à une plaque de batterie est chanfreiné.

5. Dispositif selon la revendication 4, caractérisé par le fait que le chanfrein (22) forme un angle compris entre 15° et 45° avec un plan perpendiculaire à l'axe de rotation (19) des molettes cannelées (10).

6. Dispositif selon l'une des revendications 1 à 5, caractérisé par le fait que les deux flancs de chaque nervure (16) forment entre eux un angle d'environ 90°.

7. Dispositif selon l'une des revendications 1 à 6, caractérisé par le fait que les deux parties (15) des nervures (16) forment entre elles un angle obtus.

8. Dispositif selon l'une des revendications 1 à 7, avec deux paires de molettes cannelées (10) qui sont montés sur des arbres (31, 32) entraînés en synchronisme et dans des sens opposés, les nervures (16) qui forment les cannelures de chaque paire de molettes cannelées (10) étant en prise mutuelle, avec un bâti (30) dans lequel sont montés les arbres (31, 32) et avec un moyen (35, 36, 37) d'entraînement en rotation pour les molettes cannelées (10), caractérisé par le fait que l'un (31) des deux arbres (31, 32) est couplé au moyen d'entraînement (37), par le fait qu'une roue dentée (36) est liée à l'arbre (31), laquelle roue dentée engrène avec une roue dentée (36) liée à l'autre arbre (32), par le fait que l'arbre (32) entraîné de manière indirecte est monté dans un support (40) qui est fixé de manière séparable sur le bâti (30) et par le fait que le support (40) portant l'arbre (32) entraîné de manière indirecte peut pivoter autour d'un axe parallèle aux arbres (31, 32) portant les molettes cannelées (10) aux fins d'augmenter la distance entre les molettes cannelées (10) appartenant à une même paire.

9. Dispositif selon la revendication 8, caractérisé par le fait que le support (40) portant l'arbre (32) entraîné de manière indirecte est constitué de deux flasques (41) qui sont montés pivotants sur le bâti (30) autour d'un axe (42) et par le fait que la position des flasques (41) corespondant à la fermeture est définie par au moins deux vis de réglage (43) qui agissent sur les flasques (41).

10. Dispositif selon la revendication 9, caractérisé par le fait qu'il est prévu un dispositif de blocage des flasques (41) dans la position de fermeture, par exemple une vis de serrage (45) associée à chaque flasque (41).
